# EUROPÄISCHE PATENTSCHRIFT

(11) **EP 2 936 061 B1**
(45) Veröffentlichungstag und Bekanntmachung des Hinweises auf die Patenterteilung: **16.11.2016**
(21) Anmeldenummer: 13817899.1
(22) Anmeldetag: 12.12.2013
(51) Int. Cl.: G01C 21/16, G01C 21/20

(54) **VERFAHREN ZUM BESTIMMEN VON INITIALDATEN FÜR DIE BESTIMMUNG VON LAGEDATEN EINES FAHRZEUGES**
METHOD FOR DETERMINING INITIAL DATA FOR DETERMINING POSITION DATA OF A VEHICLE
PROCÉDÉ DE DÉTERMINATION DE DONNÉES INITIALES POUR DÉTERMINER DES DONNÉES DE POSITION D'UN VÉHICULE

(30) Priorität: 20.12.2012 DE 102012223970
(43) Veröffentlichungstag der Anmeldung: 28.10.2015
(73) Patentinhaber: Continental Teves AG&Co. Ohg, 60488 Frankfurt (DE)
(72) Erfinder: ZALEWSKI, Michael, 63486 Bruchköbel (DE); RINK, Klaus, 63517 Rodenbach (DE); MENZEL, Marc, 35096 Weimar (Lahn) (DE); STÄHLIN, Ulrich, 65760 Eschborn (DE)
(86) Internationale Anmeldenummer: PCT/EP2013/076360
(87) Internationale Veröffentlichungsnummer: WO 2014/095559

(56) Entgegenhaltungen:
- EP-A2- 0 952 427
- US-A1- 2009 063 051

## Beschreibung

Die Erfindung betrifft ein Verfahren zum Bestimmen von Initialdaten für die Bestimmung von Lagedaten eines Fahrzeuges, ein Verfahren zur Bestimmung einer Position eines Fahrzeuges, eine Steuervorrichtung zur Durchführung der Verfahren und ein Fahrzeug mit der Steuervorrichtung.

Aus der DE 10 2006 029 148 A1 ist ein sogenannter Strapdown-Algorithmus bekannt, der Lagedaten eines Fahrzeuges basierend auf Positionsdaten und Fahrdynamikdaten bestimmt.

Unter den Lagedaten eines Fahrzeuges sollen nachstehend alle die Position des Fahrzeuges in einem Raum beeinflussenden Daten verstanden werden. Unter diese Daten fallen damit die Positionsdaten des Fahrzeuges aber auch die Fahrdynamikdaten des Fahrzeuges. Unter den Fahrdynamikdaten sollen alle Daten verstanden werden, die die Bewegung des Fahrzeuges beschreiben.

In der der DE 10 2006 029 148 A1 ist offenbart, dass zur Durchführung derartiger die Lagedaten eines Fahrzeuges bestimmenden Verfahren sogenannte Initialdaten notwendig sind, die auch als externer Anker bezeichnet werden.

Aus der US 2009/063051 A1 ist eine Verwendung eines GPS und eines Trägheitsnavigationssystems für die Bestimmung des Ortes eines Fahrzeugs bekannt.

Es ist Aufgabe der Erfindung, ein verbessertes Verfahren zur Bestimmung von Lagedaten eines Fahrzeuges anzugeben.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Bestimmen von Initialdaten für die Bestimmung von Lagedaten eines Fahrzeuges basierend auf Fahrdynamikdaten die Schritte:
- Zuordnen eines bestimmten Umgebungszustandes an einer bestimmten Position des Fahrzeuges zur Position des Fahrzeuges,
- Erfassen eines Umgebungszustandes, und
- Verwenden der bestimmten Position als Initialdaten, wenn eine Gegenüberstellung des erfassten Umgebungszustandes und des bestimmten Umgebungszustandes einer vorbestimmten Bedingung genügt.

Dem angegebenen Verfahren liegt die Überlegung zugrunde, dass der eingangs genannte externe Anker aus einem sogenannten Globalen Satellitennavigationssignal, kurz GNSS-Signal genannt, abgeleitet werden könnte. Dieser externe Anker könnte dann als Grundlage herangezogen werden, im Fahrzeug entweder andere Daten zu präzisieren oder sogar neue Daten zu schaffen. Ist beispielsweise aufgrund des GNSS-Signals eine absolute Lage bekannt, könnte beispielsweise unter Zuhilfenahme der Inertialsensoren die Ausgabe der Raddrehzahlsensoren überprüft und somit abgesichert werden. Alternativ oder zusätzlich könnte mit den Inertialsensoren die absolute Lage des Fahrzeuges auch dann weitergeführt werden, wenn das GNSS-Signal beispielsweise unter einem Tunnel ausgefallen ist, um so beispielsweise neue Daten zu schaffen.

Im Rahmen des angegebenen Verfahrens wird jedoch erkannt, dass wenn das Fahrzeug an einem Ort ohne GNSS-Signalempfang, wie beispielsweise unter dem zuvor genannten Tunnel abgestellt wird, sich die absolute Lage des Fahrzeuges nach dem Neustart nicht ermitteln lässt, da die Inertialsensoren zwar eine Lageänderung ausgeben können, ohne die eingangs genannten Initialdaten, also den externen Anker, ist keine Referenzlage vorhanden, die basierend auf der durch die Inertialsensoren erfassten Lageänderung zur tatsächlichen Lage des Fahrzeuges aktualisiert werden könnte.

Diese Erkenntnis zugrunde gelegt, liegt dem angegebenen Verfahren die Überlegung zugrunde, als externen Anker wenigstens eine Position abzuspeichern und diese als Referenzlage zur Weiterführung basierend auf der über die Inertialsensoren erfassten Lageänderung zu verwenden. Dieser externe Anker ist aber nur dann sinnvoll, wenn festgestellt wird, ob sich das Fahrzeug auch wirklich an einer Position befindet, die dem externen Anker entspricht. Dies könnte am besten anhand eines Umgebungszustandes verifiziert werden, der zu dem externen Anker gehört. Unter einen Umgebungszustand sollen nachstehend alle Merkmale in einer Umgebung um eine Position, die als externer Anker geeignet ist, fallen, die messtechnisch erfassbar sind. Das können Bildmerkmale, Temperaturmerkmale, reine Farbmerkmale und/oder andere Merkmale sein.

Im Rahmen des angegebenen Verfahrens wird nun vorgeschlagen, den externen Anker als bestimmte Position einem Umgebungszustand zuzuordnen, der dem Umgebungszustand an der bestimmten Position entspricht. Beim Start des Fahrzeuges, wenn kein GNSS-Signal verfügbar ist, kann nun der Umgebungszustand um das Fahrzeug erfasst und der externe Anker verwendet werden, wenn der erfasste Umgebungszustand dem Umgebungszustand entspricht, der dem externen Anker zugeordnet ist, so dass auch im Falle eines nicht verfügbaren GNSS-Signals eine Grundlage zur Positionsbestimmung des Fahrzeuges geschaffen ist.

Grundsätzlich können dabei beliebige externe Anker verwendet werden. Bei einem Fahrzeug, das beispielsweise zum Pendeln zwischen einem Arbeitsplatz und einem Heim verwendet wird, können als externe Anker ein Umgebungszustand um einen Parkplatz am Arbeitsplatz und ein Umgebungszustand um einen Parkplatz am Heim in einem Speicher interlegt werden. Beim Fahrzeugneustart kann dann der tatsächliche Umgebungszustand um das Fahrzeug erfasst werden. Wenn der tatsächliche Umgebungszustand um das Fahrzeug einem der beiden gespeicherten Umgebungszuständen entspricht, dann kann der externe Anker, und damit die Initialdaten des Fahrzeuges auf die spezifische Position des Fahrzeuges an dieser Stelle festgesetzt werden.

Es wäre zudem nicht zwingend notwendig, die zuvor genannte Überprüfung auf den Zeitpunkt des Fahrzeugneustarts festzusetzen. Gibt es beispielsweise in einem Parkhaus einen charakteristischen Umgebungszustand, wie beispielsweise einen bestimmten Streifencode am Fahrbahnboden, dann kann der externe Anker zu dem Zeitpunkt auf die Position des Streifencodes festgesetzt werden, wenn das Fahrzeug mittels Erfassen des Umgebungszustandes feststellt, dass es den Streifencode passiert.

In einer Weiterbildung der Erfindung ist die bestimmte Position des Fahrzeuges eine Position, an der das Fahrzeug abgestellt wird. Das heißt, dass die Zuordnung der als externer Anker und damit als Initialdaten dienenden bestimmten Position erst mit dem Abstellen des Fahrzeuges an einer Zielposition erfolgt. Unter einem Abstellen soll nachstehend das Anhalten des Fahrzeuges und das Ausschalten von Systemkomponenten des Fahrzeuges verstanden werden, so dass die Position des Fahrzeuges und damit eine unbeabsichtigte Bewegung des Fahrzeuges beispielsweise durch Abschleppen des Fahrzeuges nicht mehr bestimmt werden kann. Durch das Zuordnen der Position des Fahrzeuges an der es abgestellt wird zum Umgebungszustand an dieser Position kann nach dem Systemneustart unmittelbar festgestellt werden, ob sich das Fahrzeug in nicht bekannter Weise bewegt hat und ob die zuvor gespeicherte Position des Fahrzeuges als externer Anker und damit die Initialdaten noch aktuell sind.

Zu dieser Überprüfung sollte der erfasste Umgebungszustand nach dem Anstellen und einem Systemneustart des Fahrzeuges an der bestimmten Position direkt erfasst werden. Auf diese Weise kann die unmittelbar vor dem Abstellen des Fahrzeuges durchgeführte Zuordnung zwischen der abgespeicherten Position und dem abgespeicherten Umgebungszustand nach dem Systemneustart plausibilisiert werden.

In einer besonderen Weiterbildung des angegebenen Verfahrens umfasst der Umgebungszustand wenigstens einen Teil eines Abbildes eines Umfeldes um das Fahrzeug. Unter einem Abbild soll nachstehend ein vom Fahrzeug aus gesehenes Raumraster, vorzugsweise jedoch ein Flächenraster verstanden werden, dessen einzelnen Rasterpunkten Messwerte zugeordnet werden, die an der Position des Fahrzeuges vom Fahrzeug aus beispielsweise mit Sensoren erfasst werden. Diese Messwerte können Abstandswerte, Bildwerte, Temperaturwerte und/oder beliebige andere Messwerte sein. Das Abbild des Umfeldes um das Fahrzeug kennzeichnet die Position, an der sich das Fahrzeug befindet weitgehend eindeutig, so dass es unwahrscheinlich ist, dass ein und demselben Abbild zwei verschiedene Positionen zugeordnet werden können.

In einer bevorzugten Weiterbildung des angegebenen Verfahrens wird der Teil des Abbildes des Umfeldes um das Fahrzeug mit Umfeldsensoren erfasst. Derartige Umfeldsensoren, wie eine Kamera oder ein Abstandssensor sind in modernen Fahrzeugen ohnehin vorhanden, so dass das angegebene Verfahren ohne größere Hardwareumrüstungsmaßnahmen in einem Fahrzeug implementierbar ist.

In einer zusätzlichen Weiterbildung des angegebenen Verfahrens kann der Teil des Abbildes des Umfeldes um das Fahrzeug in einer Ebene außerhalb einer Bewegungsebene des Fahrzeuges erfasst werden. Dieser Weiterbildung liegt die Überlegung zugrunde, dass sich in der Umgebung des Fahrzeuges auch andere Fahrzeuge oder bewegliche Objekte befinden könnten, die den Umgebungszustand und damit das Abbild des Umfeldes um das Fahrzeug verändern. Diese beweglichen Objekte bewegen sich jedoch in der Regel in der gleichen Bewegungsebene, wie das Fahrzeug, so dass beispielsweise eine Erfassung des Bodens oder eine Erfassung der Decke eines Parkhauses als Abbild des Umfeldes um das Fahrzeug diesen Nachteil weitgehend vermeiden sollten.

In einer anderen Weiterbildung des angegebenen Verfahrens wird der Teil des Abbildes des Umfeldes um das Fahrzeug mittels Objekterkennung erfasst. Auf diese Weise können in der Umgebung Objekte klassifiziert und somit als für die Festlegung des Abbildes des Umfeldes um das Fahrzeug als ungeeignet aussortiert werden. Wird beispielsweise ein anderes Fahrzeug erkannt, so kann es zur Definition des Abbildes des Umfeldes um das Fahrzeug ausgeschlossen werden, da es wahrscheinlich ist, dass sich das Fahrzeug irgendwann wegbewegen und somit das Abbild um das Fahrzeug verändern, also verfälschen wird.

Gemäß einem anderen Aspekt der Erfindung umfasst ein Verfahren zum Bestimmen einer aktuellen Position eines Fahrzeuges die Schritte
- Erfassen von Initialdaten mit einem angegebenen Verfahren,
- Erfassen von Fahrdynamikdaten, und
- Bestimmen der aktuellen Position durch eine Weiterführung der Initialdaten basierend auf den Fahrdynamikdaten.

Gemäß einem weiteren Aspekt der Erfindung ist eine Steuervorrichtung eingerichtet, ein Verfahren nach einem der vorstehenden Ansprüche durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem anderen Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges auf einem Parkhausstellplatz, und
Fig. 2 eine Prinzipdarstellung einer Positionsbestimmungsvorrichtung in dem Fahrzeug der Fig. 1.

In den Figuren werden gleiche Elemente mit gleichen Bezugszeichen versehen und nur einmal beschrieben.

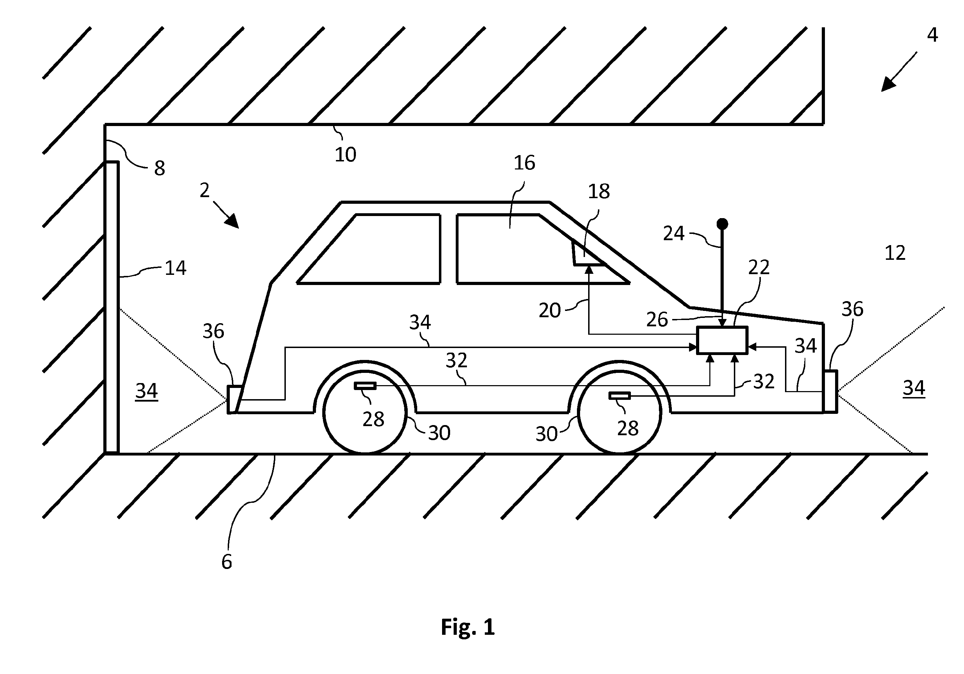

Es wird auf Fig. 1 Bezug genommen, die eine Prinzipdarstellung eines Fahrzeuges 2 auf einem Parkhausstellplatz 4 zeigt.

Der Parkhausstellplatz 4 ist in der vorliegenden Ausführung Teil eines nicht weiter dargestellten Parkhauses. Der Parkhausstellplatz 4 umfasst einen Stellplatzboden 6, eine Stellplatzwand 8, eine Stellplatzdecke 10 und einen Stellplatzzugang 12, über den das Fahrzeug 2 in den Parkhausstellplatz 4 einfahren oder aus diesem herausfahren kann.

An der Stellplatzwand 8 soll in der vorliegenden Ausführung ein Schild 14 mit einem nicht weiter dargestellten Bild angebracht sein.

Das Fahrzeug 2 umfasst in der vorliegenden Ausführung einen Fahrzeuginnenraum 16, in dem ein an sich bekanntes Navigationsgerät 18 zu Darstellung einer absoluten Istposition 20 des Fahrzeuges 2 angeordnet ist.

Die absolute Istposition 20 wird von einer Positionsbestimmungsvorrichtung 22 ausgegeben. Die Positionsbestimmungsvorrichtung 22 umfasst dazu eine Antenne 24, mit der sie an sich bekannte globale Satellitennavigationssignale 26, nachstehend GNSS-Signale 26 genannt, wie beispielsweise GPS-Signale empfangen und daraus in an sich bekannter Weise die absolute Istposition 20 des Fahrzeuges 2 bestimmen kann.

Wird jedoch über die Antenne 24 kein GNSS-Signal empfangen, weil alle GNSS-Signale beispielsweise in dem Parkhaus über die Stellplatzdecke 10 abgeschirmt werden, so kann die Positionsbestimmungsvorrichtung, wie beispielsweise mit dem in der DE 10 2006 029 148 A1 offenbarten Strapdown-Algorithmus, die absolute Istposition 20 auch basierend aus einer relativen Lageänderung des Fahrzeuges 2 und der letzten bekannten absoluten Istposition 20 fortführen.

Zur Bestimmung der relativen Lageänderung weist das Fahrzeug 2 in der vorliegenden Ausführung nicht näher referenzierte Inertialsensoren, die Beschleunigungen und Gierraten ausgeben, sowie Raddrehzahlsensoren 28 auf, die an den Rädern 30 des Fahrzeuges angeordnet sind und die Drehzahlen 32 der Räder 30 ausgeben. Über die Beschleunigungen und Gierraten aus den Inertialsensoren und Drehzahlen 32 kann beispielsweise in der in der DE 10 2006 029 148 A1 offenbarten Weise die relative Lageänderung des Fahrzeuges 2 bestimmt und auf diese Weise eine aktuelle absolute Istposition 20 basierend auf einer zuletzt bekannten aktuellen Istposition 20 bestimmt werden.

Nach einem Systemneustart des Fahrzeugs 2 steht jedoch in der Regel keine letzte bekannte Istposition 20 zur Verfügung. Zwar könnte letzte bekannte Istposition 20 vor dem Systemneustart des Fahrzeuges 2 verwendet werden, wenn das Fahrzeug 2 jedoch während des Abstellens des Systems und dem Systemneustart beispielsweise aus dem Parkhausstellplatz 4 durch Abschleppen herausgeschleppt wird, dann ist die letzte bekannte Istposition 20 vor dem Systemneustart nicht mehr gültig und würde zu einer fehlerhaften Istposition 20 führen.

Aus diesem Grund wird im Rahmen der vorliegenden Ausführung vorgeschlagen, nach einem Systemneustart die letzte bekannte Istposition 20, die vor dem Systemneustart bestimmt wurde, nach dem Systemneustart zu plausibilisieren.

Dazu wird in der vorliegenden Ausführung ein Umgebungszustand um das Fahrzeug 2 in Form eines Abbildes 34 um das Fahrzeug 2 mit Umfeldsensoren in Form von Kameras 36 zum Zeitpunkt des Bestimmens der letzten bekannten Istposition 20 ermittelt und gespeichert. Nach dem Systemneustart wird dann das gespeicherte Abbild 34 um das Fahrzeug 2 mit einem aktuellen Abbild 34 um das Fahrzeug 2 verglichen. Sind beide Abbilder 34 gleich (was beispielsweise anhand einer an späterer Stelle erläuterten Fehlerschwelle bestimmt werden kann), dann wird erkannt, dass das Fahrzeug 2 immer noch an der gleichen Stelle steht und die letzte bekannte Istposition 20 als Ausgangspunkt für die Bestimmung neuer Istpositionen beispielsweise basierend auf dem zuvor genannten Strapdown-Algorithmus freigegeben.

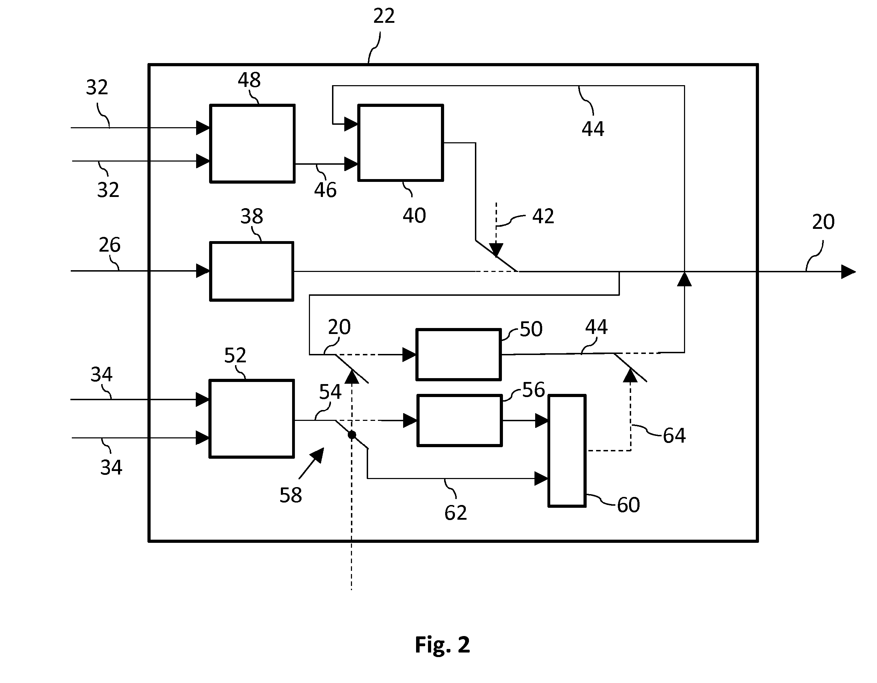

Dies soll anhand Fig. 2 näher erläutert werden, die eine Prinzipdarstellung einer Positionsbestimmungsvorrichtung 22 in dem Fahrzeug 2 der Fig. 1 zeigt.

In der vorliegenden Ausführung kann die Positionsbestimmungseinrichtung 22 die Istposition 20 des Fahrzeugs 2 entweder basierend auf einer Trilateration des GNSS-Signals 26 in einer Triangulationseinrichtung 38 in einer dem Fachmann bekannten Weise und/oder basierend auf dem oben genannten Strapdown-Algorithmus in einer Iterationseinrichtung 40 bestimmen.

Weiter wird das Ausgangssignal einer der beiden Einrichtungen 38, 40 in der vorliegenden Ausführung über ein Steuersignal 42 ausgewählt, das beispielsweise basierend auf der Verfügbarkeit des GNSS-Signals 26 generiert werden kann.

Alternativ dazu könnten die Ausgangssignale der beiden Einrichtungen 38, 40 in nicht weiter gezeigter Weise auch gegeneinander gefiltert werden, um beispielsweise eine Toleranz in der Istposition 20 des Fahrzeuges 2 zu bestimmen. Details dazu können beispielsweise der WO 2011/ 098 333 A1 entnommen werden. Das Filtern der beiden Ausgangssignale kann eine Gegenüberstellung beider Ausgangssignale umfassen. Diese Gegenüberstellung kann beispielsweise durch eine reine Mittelwertbildung ohne weitere Berücksichtigung anderer Faktoren wie Rauschen durchgeführt werden. Soll das Rauschen mit berücksichtigt werden, käme ein Zustandsbeobachter oder ein Kalman-Filter als Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt.

Die oben genannte Iterationseinrichtung 40 benötigt zur Berechnung einer aktuellen Istposition 20 im Rahmen des Strapdown-Algorithmus Initialdaten 44, die eine Istposition 20 des Fahrzeuges 2 beschreiben, von der aus eine neue Istposition 20 des Fahrzeuges 2 berechnet werden soll. Zudem benötigt die Iterationseinrichtung 40 eine Positionsänderung 46 des Fahrzeuges 2, die in der vorliegenden Ausführung mit einem Lageänderungsberechnungseinheit 48 basierend auf den Raddrehzahlen 32 bestimmt wird.

Die zuvor genannten Initialdaten 44 dürfen nicht beliebig gewählt werden. Sie müssen vielmehr eine möglichst aktuelle Istposition 20 des Fahrzeuges beschreiben, deren Fehler im Bereich der durch die Lageänderungsberechnungseinheit 48 berechneten Positionsänderung 46 des Fahrzeuges 2 liegt. Ist der Fehler der Initialdaten 44 größer, so wird die Istposition 20 des Fahrzeuges 2 zwangsläufig falsch berechnet, wenn sie beispielsweise nicht basierend auf dem GNSS-Signal 26 korrigiert werden kann.

In dem eingangs genannten Parkhaus ist diese Korrektur aufgrund der Abschattung des GNSS-Signals 26 nicht möglich. Wenn mit dem Fahrzeug 2 auf dem Parkhausstellplatz 4 ein Systemneustart durchgeführt wird, müsste daher solange gewartet werden, bis das GNSS-Signal 26 und damit Initialdaten 44 zur Berechnung der Istposition 20 basierend auf der Iterationseinrichtung 40 zur Verfügung stehen.

Um die Initialdaten 44 nach dem Systemneustart des Fahrzeuges 2 dennoch sofort zur Verfügung zu haben, wird wie bereits erwähnt, im Rahmen der vorliegenden Ausführung vorgeschlagen, die letzte bekannte Istposition 20 vor dem Systemneustart in einem Positionsspeicher 50 zu hinterlegen.

Wie bereits erwähnt, muss jedoch sichergestellt sein, dass sich das Fahrzeug seit dem Abspeichern der letzten bekannten Istposition 20 im Positionsspeicher 50 bis zum Systemneustart nicht bewegt hat. Dies wird in der vorliegenden Ausführung, wie bereits erwähnt, durch ein Verknüpfen der im Positionsspeicher 50 hinterlegten Istposition 20 und damit der Initialdaten 44 mit einem Abbild 34 der Umgebung um das Fahrzeug 2 erreicht.

Dazu umfasst eine Abbildungserfassungseinrichtung 52 das Abbild 34 und bereitet es auf. So kann die Abbildungserfassungseinrichtung 52 beispielsweise das erfasste Abbild 34 in bildtechnisch aufbereiten, konvertieren oder sogar bestimmte Objekte in dem Abbild erkennen und klassifizieren. Das aufbereitete Abbild 54 wird dann in einem Abbildspeicher 56 hinterlegt.

Damit das aufbereitete Abbild 54 der im Positionsspeicher 50 hinterlegten Istposition 20 zugeordnet wird, ist in der vorliegenden Ausführung ein Synchronisationsschalter 58 vorgesehen, der beispielsweise beim Abstellen des Fahrzeuges 2 durch eine Motorsteuerung betätigt werden und die Isposition 20 zum Positionsspeicher 50 und entsprechend das aufbereitete Abbild 54 zum Abbildspeicher 56 durchleiten kann.

Beim Systemneustart bleibt der Synchronisationsschalter 58 in einer Stellung, in der das aufbereitete Abbild 54 an eine Vergleichseinrichtung 60 weitergeleitet wird. Die Istposition 20 des Fahrzeuges bleibt in dieser Stellung des Synchronisationsschalters 58 unberücksichtigt. Die Vergleichseinrichtung 60 filtert das gespeicherte Abbild 62 im Abbildspeicher 56 und das aufbereitete Abbild 54 aus der Abbildungserfassungseinrichtung 52 beispielsweise durch eine oben genannte Gegenüberstellung und berechnet einen Fehlerwert zwischen den beiden Abbildern 54, 62. Unterschreitet der Fehlerwert eine vorbestimmte Schwelle, dann gibt die Vergleichseinrichtung 60 ein Steuersignal 64 aus, mit dem sie die Ausgabe der im Positionsspeicher 50 hinterlegten Istposition 20 als Initialdaten 44 für die weitere Berechnung der Istposition 20 des Fahrzeuges 2 über einen nicht weiter referenzierten Schalter freigibt.

Auf diese Weise ist sichergestellt, dass für die Berechnung der Istposition 20 des Fahrzeuges 2 im Falle eines fehlenden GNSS-Signals 26 keine fehlerhaften Initialdaten 44 verwendet werden.

## Patentansprüche

1. Verfahren zum Bestimmen von Initialdaten (44) für die Bestimmung von Lagedaten eines Fahrzeuges (2) basierend auf Fahrdynamikdaten (32), **dadurch gekennzeichnet, dass** es folgende Verfahrensschritte umfasst:
- Zuordnen (58) eines bestimmten Umgebungszustandes (54) an einer bestimmten Position (20) des Fahrzeuges zur bestimmten Position (20) des Fahrzeuges (2),
- Erfassen eines Umgebungszustandes (62), und
- Verwenden der bestimmten Position (20) als Initialdaten (44), wenn eine Gegenüberstellung (60) des erfassten Umgebungszustandes (62) und des bestimmten Umgebungszustandes (54) einer vorbestimmten Bedingung genügt,
wobei die bestimmte Position (20) des Fahrzeuges (2) eine Position (20) ist, an der das Fahrzeug (2) abgestellt wird, und wobei der bestimmte Umgebungszustand (54) wenigstens einen Teil eines Abbildes (34) eines Umfeldes um das Fahrzeug (2) umfasst.

2. Verfahren nach Anspruch 1, wobei der erfasste Umgebungszustand (62) nach dem Anstellen und einem Systemneustart des Fahrzeuges (2) an der bestimmten Position (20) erfasst wird.

3. Verfahren nach einem der vorstehenden Ansprüche, wobei der Teil des Abbildes (34) des Umfeldes um das Fahrzeug (2) mit Umfeldsensoren (36) erfasst wird.

4. Verfahren nach einem der vorstehenden Ansprüche, wobei der Teil des Abbildes (34) des Umfeldes um das Fahrzeug (2) in einer Ebene außerhalb einer Bewegungsebene des Fahrzeuges (2) erfasst wird.

5. Verfahren nach einem der vorstehenden Ansprüche, wobei der Teil des Abbildes (34) des Umfeldes um das Fahrzeug (2) mittels Objekterkennung erfasst wird.

6. Verfahren zum Bestimmen einer aktuellen Position (20) eines Fahrzeuges (2), umfassend
- Erfassen von Initialdaten (44) mit einem Verfahren nach einem der vorstehenden Ansprüche,
- Erfassen von Fahrdynamikdaten (32), und
- Bestimmen der aktuellen Position (20) durch eine Weiterführung der Initialdaten (44) basierend auf den Fahrdynamikdaten (32).

7. Steuervorrichtung (22), die eingerichtet ist, ein Verfahren nach einem der vorstehenden Ansprüche durchzuführen.

8. Fahrzeug (2) umfassend eine Steuervorrichtung (22) nach Anspruch 7.

## Claims

1. Method for determining initial data (44) for determining position data of a vehicle (2) on the basis of vehicle-dynamics data (32), **characterized in that** it comprises the following method steps:
- associating (58) a defined ambient condition (54) at a defined position (20) of the vehicle with the position (20) of the vehicle (2),
- detecting an ambient condition (62), and
- using the defined position (20) as initial data (44) if a comparison (60) of the detected ambient condition (62) and the defined ambient condition (54) satisfies a predetermined condition,
- wherein the defined position (20) of the vehicle (2) is a position (20) at which the vehicle (2) is switched off, and
- wherein the defined ambient condition (54) comprises at least a portion of an image (34) of a surrounding area of the vehicle (2).

2. Method according to Claim 1, wherein the detected ambient condition (62) after the switching-off and a system restart of the vehicle (2) is detected at the defined position (20).

3. Method according to any of the preceding claims, wherein the portion of the image (34) of the surrounding area of the vehicle (2) is detected by surround sensors (36).

4. Method according to any of the preceding claims, wherein the portion of the image (34) of the surrounding area of the vehicle (2) is detected in a plane outside a movement plane of the vehicle (2).

5. Method according to any of the preceding claims, wherein the portion of the image (34) of the surrounding area of the vehicle (2) is detected by means of object recognition.

6. Method for determining a current position (20) of a vehicle (2), comprising:
- acquiring initial data (44) using a method as claimed in any of the previous claims,
- acquiring vehicle-dynamics data (32), and
- determining the current position (20) by extrapolating the initial data (44) on the basis of the vehicle-dynamics data (32).

7. Control device (22), which is designed to implement a method according to any of the previous claims.

8. Vehicle (2) comprising a control device (22) as claimed in Claim 7.

## Revendications

1. Procédé de détermination de données initiales (44) pour la détermination de données de position d'un véhicule (2) sur la base de données dynamiques de déplacement (32), **caractérisé en ce qu'**il comprend les étapes de procédé suivantes :
- associer (58) un état ambiant déterminé (54), pour une position déterminée (20) du véhicule, à la position déterminée (20) du véhicule (2),
- détecter un état ambiant (62), et
- utiliser la position déterminée (20) en tant que données initiales (44) lorsqu'une comparaison (60) de l'état ambiant détecté (62) et de l'état ambiant déterminé (54) satisfait à une condition prédéterminée, dans lequel la position déterminée (20) du véhicule (2) est une position (20) à laquelle le véhicule (2) est à l'arrêt, et
dans lequel l'état ambiant déterminé (54) comprend au moins une partie d'une image (34) d'un environnement du véhicule (2).

2. Procédé selon la revendication 1, dans lequel l'état ambiant détecté (62) est détecté à la position déterminée (20) après la mise en marche et un redémarrage des systèmes du véhicule (2).

3. Procédé selon l'une quelconque des revendications précédentes, dans lequel la partie de l'image (34) de l'environnement du véhicule (2) est détectée au moyen de capteurs d'environnement (36).

4. Procédé selon l'une quelconque des revendications précédentes, dans lequel la partie de l'image (34) de l'environnement du véhicule (2) est détectée dans un plan situé à l'extérieur d'un plan de mouvement du véhicule (2).

5. Procédé selon l'une quelconque des revendications précédentes, dans lequel la partie de l'image (34) de l'environnement du véhicule (2) est détectée par reconnaissance d'objet.

6. Procédé de détermination d'une position actuelle (20) d'un véhicule (2), consistant à
- détecter des données initiales (44) au moyen d'un procédé selon l'une quelconque des revendications précédentes,
- détecter des données dynamiques de déplacement (32), et
- déterminer la position actuelle (20) par extrapolation des données initiales (44) sur la base des données dynamiques de déplacement (32).

7. Dispositif de commande (22) qui est conçu pour mettre en oeuvre un procédé selon l'une quelconque des revendications précédentes.

8. Véhicule (2) comprenant un dispositif de commande (22) selon la revendication 7.
